# EUROPÄISCHE PATENTSCHRIFT

(11) **EP 0 815 918 B1**
(45) Veröffentlichungstag und Bekanntmachung des Hinweises auf die Patenterteilung: **07.04.1999**
(21) Anmeldenummer: 97110164.7
(22) Anmeldetag: 21.06.1997
(51) Int. Cl.: B01D 46/52, B01D 46/00, F02M 35/024, B01D 46/42

(54) **Filtergehäuse für ein austauschbares plattenförmiges Filterelement**
Filter casing for an exchangeable plate type filter element
Boîtier filtrant pour élément filtrant échangeable du type à plaques

(30) Priorität: 26.06.1996 DE 19625443
(43) Veröffentlichungstag der Anmeldung: 07.01.1998
(73) Patentinhaber: KNECHT FILTERWERKE GMBH, 70376 Stuttgart (DE)
(72) Erfinder: Gerwig, Dietmar, 73240 Wendlingen (DE); Keller, Conrad, 73033 Göppingen (DE); Pscheidt, Berthold, 73765 Neuhausen (DE); Schnorr, Michael, 70376 Stuttgart (DE)
(74) Vertreter: Patentanwalts-Partnerschaft Rotermund + Pfusch

(56) Entgegenhaltungen:
- US-A- 4 925 469
- US-A- 5 125 941

## Beschreibung

Die Erfindung betrifft ein Filtergehäuse für ein austauschbares plattenförmiges Filterelement nach dem Oberbegriff des Patentanspruchs 1.

Ein solches Filtergehäuse wird in Fällen benötigt, in denen aufgrund eines beschränkten Einbauraumes das Filterelement nicht senkrecht zu seiner Platten-Ebene dem Gehäuse entnommen werden kann.

Filtergehäuse für derartige Einbaufälle sind beispielsweise aus der DE-C-39 16 544 und der US-A-49 25 469 bekannt.

Bei dem Filtergehäuse gemäß der DE-C-39 16 544 lagert das Filterelement in einer Schublade, die in ein Filtergehäuse einschiebbar ist. Bei dieser Lösung ist zum Öffnen des Gehäuses in einer Richtung senkrecht zu der Filterelementebene überhaupt kein Freiraum notwendig. Eine solche Ausführung stellt somit bei engen Einbauverhältnissen eine technisch einwandfreie und optimale Lösung dar, die allerdings wegen eines konstruktiv komplizierten Aufbaus kostenaufwendig in der Herstellung ist. So ist jeweils eine Schublade erforderlich, die zudem noch zweiteilig sein muß. Damit die umlaufende Dichtung des Filterelementes beim Einschieben der Schublade nicht verletzt wird, muß zunächst ein in der Schublade beweglich gelagerter Rahmen, in den das Filterelement eingelegt ist, in das Gehäuse ohne Verspannen der Dichtung des Filterelementes eingeführt werden. Das Verspannen der Dichtung kann erst in einem zweiten Schritt erfolgen, in dem der Rahmen mit dem Filterelement lediglich noch senkrecht zur Ebene des Filterelementes verschoben wird.

Das Filtergehäuse gemäß US-A-49 25 469 benötigt eine Positioniereinrichtung zum Einschieben und Herausziehen des Filterelements.

Hiervon ausgehend beschäftigt sich die Erfindung mit dem Problem, ein einfacher aufgebautes und kostengünstiger herstellbares Filtergehäuse zu schaffen, bei dem das Filterelement aus Platzgründen im wesentlichen seitlich längs der Ebene dieses Elementes austauschbar ist.

Eine Lösung hierzu zeigt ein Filtergehäuse nach den kennzeichnenden Merkmalen des Patentanspruchs 1 auf.

Zweckmäßige Ausgestaltungen sind Gegenstand der Unteransprüche und werden anhand eines Ausführungsbeispieles noch näher erläutert werden.

Ein solches Ausführungsbeispiel ist in der Zeichnung dargestellt.

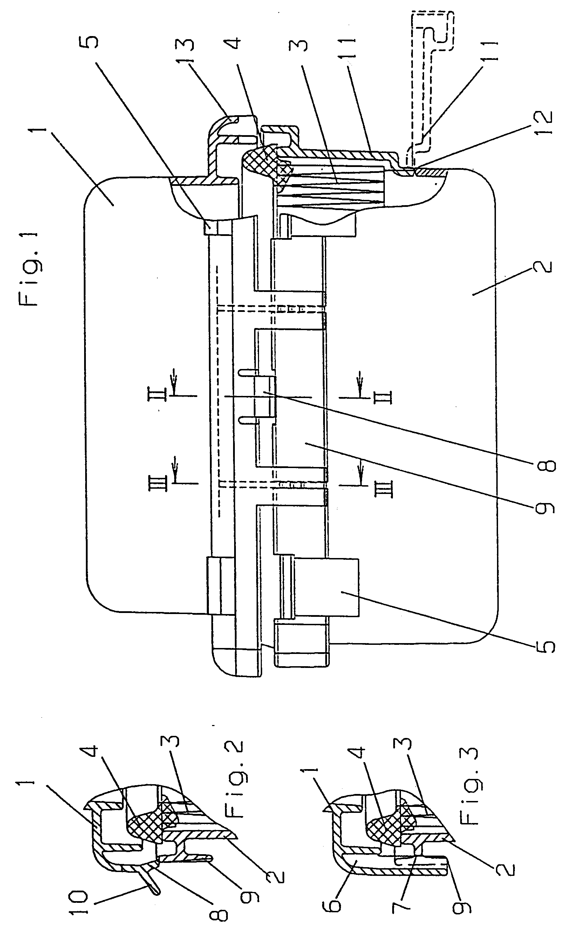

Es zeigen
- Fig. 1: eine Ansicht eines trennbaren Filtergehäuses in geöffnetem Zustand mit einem Teilbereich im Schnitt,
- Fig. 2: einen Schnitt entlang der Linie II-II in Fig. 1,
- Fig. 3: einen Schnitt entlang Linie III-III in Fig. 1.

Ein Filtergehäuse besteht aus einem ersten Teil 1, das als Deckel ausgebildet ist und einem zweiten Teil 2, das den Aufnahmeteil für ein plattenförmiges Filterelement 3 darstellt.

In das zweite Teil ist das plattenförmige Filterelement 3 über eine an diesem angebrachte umlaufende Dichtung 4 eingehängt. Durch ein Verschließen der beiden Teile 1 und 2 gegeneinander liegt das Filterelement 3 dicht innerhalb des Filtergehäuses und ist in diesem senkrecht zu seiner Ebene durchströmbar.

Das dichte Verschließen der beiden Gehäuse-Teile 1 und 2 gegeneinander erfolgt über übliche Spannmittel, wie beispielsweise Verschlußklammern, die über den Umfang der Gehäuse-Teile 1 und 2 verteilt und in der Zeichnung nicht dargestellt sind. Lediglich Widerlager 5 für solche Spannmittel sind aus dem gezeichneten Ausführungsbeispiel erkennbar.

Beim Öffnen der beiden Gehäuse-Teile 1 und 2 erfolgt eine Nut- und Federführung zwischen diesen beiden Teilen. Konkret kann diese Nut- und Federführung durch Laschen 6 an dem ersten Gehäuse-Teil 1, die in Nuten 7 des zweiten Gehäuse-Teiles 2 eingreifen, gebildet sein. Insgesamt können beispielsweise vier solcher Nut- und Federführungen auf dem Umfang verteilt vorgesehen sein und zwar zweckmäßigerweise jeweils zwei Führungen auf gegenüberliegenden Seitenwänden.

Um bei geöffnetem Filtergehäuse einen vorgegebenen Mindestabstand zwischen den beiden Gehäuse-Teilen 1 und 2 selbsttätig einhalten zu können, sind auf gegenüberliegenden Seitenwandbereichen Rasthebel 8 vorgesehen. Diese Rasthebel 8 gehen von dem ersten Teil 1 des Gehäuses aus und sind jeweils einem Steg 9 an dem zweiten Gehäuse-Teil 2 derart zugeordnet, daß sie bei geöffnetem Gehäuse auf die Stege 9 aufschnappen, wodurch ein Schließen des Filtergehäuses ohne ein manuelles Lösen dieser Rasthebel 8 nicht möglich ist. Um dieses Lösen von Hand vornehmen zu können, besitzen diese Raststege von Hand betätigbare Laschen 10.

Um das Filterelement 3 bei geöffnetem Filtergehäuse entnehmen zu können, besitzt das zweite Gehäuse-Teil 2 an einer Seitenwand eine schwenkbare Klappe 11, die in geöffnetem Zustand eine Entnahmeöffnung innerhalb des zweiten Gehäuse-Teiles 2 für das Filterelement 3 freigibt. Die Klappe 11 kann beispielsweise über ein Filmscharnier 12 an dem Filtergehäuseteil 2 angelenkt sein. Die Klappe 11 liegt in geschlossenem Zustand derartig an dem zweiten Gehäuse-Teil 2 an, daß bei einem insgesamt geschlossenen Filtergehäuse das erste Gehäuse-Teil 1 mit einem Randbereich 13 ein Öffnen der Klappe 11 verhindert. Gegenüber dem Gehäuse-Teil 2 kann die Klappe 11 in geschlossenem Zustand gedichtet sein.

## Patentansprüche

1. Filtergehäuse für ein austauschbares plattenförmiges Filterelement mit einer parallel zu seiner Ebene außen umlaufenden Dichtung, insbesondere für ein Luftfilter eines Verbrennungsmotors eines Kraftfahrzeuges, in dem das Filterelement einen Roh- und Reinraum voneinander trennt und bei dem es durch eine verschließbare Öffnung in Richtung seiner Ebene austauschbar ist,
**gekennzeichnet durch die Merkmale**
- das Filtergehäuse ist zum Öffnen senkrecht zu der Ebene des Filterelementes (3) in ein erstes und ein zweites Gehäuse-Teil (1, 2) trennbar,
- der überwiegende Aufnahmeraum für das Filterelement (3) liegt innerhalb des zweiten Gehäuse-Teiles (2),
- die verschließbare Öffnung liegt in einem Seitenwandbereich des zweiten Gehäuse-Teiles (2) und erstreckt sich bis in die Trennebene zwischen den beiden Gehäuse-Teilen (1, 2).

2. Filtergehäuse nach Anspruch 1,
**dadurch gekennzeichnet,**
daß die beiden Gehäuse-Teile (1, 2) beim Öffnen definiert gegeneinander geführt sind.

3. Filtergehäuse nach Anspruch 1 oder 2,
**dadurch gekennzeichnet,**
daß die Führung über gegeneinander verschiebbare Nut- und Federmittel (6, 7) erfolgt.

4. Filtergehäuse nach einem der vorhergehenden Ansprüche,
**dadurch gekennzeichnet,**
daß die bei geöffnetem Filtergehäuse voneinander getrennten beiden Gehäuse-Teile (1, 2) mit einer vorgebbaren Mindestspaltweite gegeneinander arretierbar sind.

5. Filtergehäuse nach Anspruch 4,
**dadurch gekennzeichnet,**
daß die Arretiermittel einen von Hand betätigbaren Rasthebel (8) umfassen, der bei geöffnetem Filtergehäuse in Arretierstellung schwenkt und zum Schließen des Filtergehäuses aus dieser Arretierstellung manuell lösbar ist.

6. Filtergehäuse nach einem der vorhergehenden Ansprüche,
**dadurch gekennzeichnet,**
daß die Gehäusewandöffnung des zweiten Gehäuse-Teiles (2) durch eine an diesem Teil schwenkbar angeordnete Klappe (11) verschließbar ist.

7. Filtergehäuse nach einem der vorhergehenden Ansprüche,
**dadurch gekennzeichnet,**
daß die Klappe (11) über ein Filmscharnier (12) schwenkbar an dem zweiten Gehäuse-Teil (2) gelagert ist.

8. Filtergehäuse nach einem der vorhergehenden Ansprüche,
**dadurch gekennzeichnet,**
daß die Klappe (11) in Verschlußstellung die Seitenwandöffnung über eine Dichtung abdeckt.

9. Filtergehäuse nach einem der vorhergehenden Ansprüche,
**dadurch gekennzeichnet,**
daß das erste Gehäuse-Teil (1) bei geschlossenem Filtergehäuse ein Öffnen der Seitenwandöffnung innerhalb des zweiten Gehäuse-Teiles (2) verhindert.

## Claims

1. Filter housing for an exchangeable plate-shaped filter element with an external peripheral seal parallel to its plane, in particular for an air filter of an internal-combustion engine of a motor vehicle, in which the filter element separates a crude and a pure chamber from one another and in which it can be exchanged through a closable aperture in the direction of its plane, characterised by the features
- the filter housing can be separated into a first and a second housing part (1, 2) perpendicularly to the plane of the filter element (3) for opening purposes,
- most of the space for receiving the filter element (3) is located inside the second housing part (2),
- the closable aperture is located in a side wall region of the second housing part (2) and extends into the parting plane between the two housing parts (1, 2).

2. Filter housing according to claim 1, characterised in that the two housing parts (1, 2) are guided relative to one another in a defined manner during the opening process.

3. Filter housing according to claim 1 or 2, characterised in that guidance is effected via mutually displaceable tongue and groove means (6, 7).

4. Filter housing according to one of the preceding claims, characterised in that the two housing parts (1, 2) separated from one another when the filter housing is opened can be arrested relative to one another with a predeterminable minimum gap width.

5. Filter housing according to claim 4, characterised in that the arresting means comprise a hand operated catch lever (8) which pivots into the arresting position when the filter housing is opened and is manually releasable from this arresting position for closing the filter housing.

6. Filter housing according to one of the preceding claims, characterised in that the housing wall aperture of the second housing part (2) can be closed by a flap (11) arranged pivotally on this part.

7. Filter housing according to one of the preceding claims, characterised in that the flap (11) is mounted pivotally on the second housing part (2) via a film hinge (12).

8. Filter housing according to one of the preceding claims, characterised in that the flap (11) seals the side wall aperture via a seal in the closed position.

9. Filter housing according to one of the preceding claims, characterised in that the first housing part (1) prevents opening of the side wall aperture inside the second housing part (2) when the filter housing is closed.

## Revendications

1. Boîtier de filtre pour un élément filtrant remplaçable en forme de plaque ayant un joint en faisant le tour parallèlement à son plan, en particulier pour filtre à air de moteur à combustion interne de véhicule automobile, dans lequel l'élément filtrant sépare un espace brut d'un espace pur et où il peut être remplacé dans la direction de son plan par une ouverture obturable,
caractérisé par les caractéristiques suivantes :
- le boîtier de filtre peut, pour son ouverture, être divisé en une première partie (1) et une deuxième partie (2) perpendiculairement au plan de l'élément filtrant (3),
- la majeure partie de l'espace recevant l'élément filtrant (3) se trouve dans la deuxième partie (2) du boîtier,
- l'ouverture obturable se trouve dans une partie de paroi latérale de la deuxième partie (2) du boîtier et s'étend jusqu'au plan de séparation des deux parties (1, 2) du boîtier.

2. Boîtier de filtre selon la revendication 1, caractérisé par le fait que ses deux parties (1, 2) sont, lors de son ouverture, guidées l'une par rapport à l'autre de manière définie.

3. Boîtier de filtre selon l'une des revendications 1 et 2, caractérisé par le fait que le guidage est réalisé par des moyens à rainure et languette (6, 7) mobiles l'un par rapport à l'autre.

4. Boîtier de filtre selon l'une des revendications précédentes, caractérisé par le fait que ses deux parties (1, 2), séparées lorsqu'il est ouvert, peuvent être arrêtées l'une par rapport à l'autre avec une largeur minimale d'interstice fixée à l'avance.

5. Boîtier de filtre selon la revendication 4, caractérisé par le fait que les moyens d'arrêt comprennent un levier d'arrêt manoeuvrable à la main (8) qui, lorsque le boîtier est ouvert, est basculé en position d'arrêt et, pour la fermeture du boîtier, peut être dégagé manuellement de cette position d'arrêt.

6. Boîtier de filtre selon l'une des revendications précédentes, caractérisé par le fait que l'ouverture de la paroi de la deuxième partie (2) du boîtier peut être obturée par un volet (11) monté basculant sur cette partie.

7. Boîtier de filtre selon l'une des revendications précédentes, caractérisé par le fait que le volet (11) est monté basculant sur la deuxième partie (2) du boîtier par une charnière souple (12).

8. Boîtier de filtre selon l'une des revendications précédentes, caractérisé par le fait que le volet (11), fermé, couvre par un joint d'étanchéité l'ouverture de la paroi latérale.

9. Boîtier de filtre selon l'une des revendications précédentes, caractérisé par le fait que lorsqu'il est fermé, sa première partie (1) empêche de dégager l'ouverture de la paroi latérale de sa deuxième partie (2).
